# EUROPÄISCHE PATENTANMELDUNG

(11) **EP 4 057 596 A1**
(43) Veröffentlichungstag der Anmeldung: **14.09.2022**
(21) Anmeldenummer: 22157417.1
(22) Anmeldetag: 18.02.2022
(51) Int. Cl.: H04L 61/5038, H04L 12/40

(54) **ADRESSIERBARES MASTER-SLAVE-SYSTEM SOWIE VERFAHREN ZUM ADRESSIEREN VON SLAVE-EINHEITEN**

(30) Priorität: 11.03.2021 DE 102021105919
(71) Anmelder: ebm-papst Mulfingen GmbH & Co. KG, 74673 Mulfingen (DE)
(72) Erfinder: HUMM, Markus, 74679 Weißbach (DE); FESSEL, Andreas, 97990 Weikersheim (DE)
(74) Vertreter: Staeger & Sperling Partnerschaftsgesellschaft mbB

(57) **Zusammenfassung**

Die vorliegende Erfindung betrifft ein Master-Slave-System (1) mit n seriell über eine Busleitung (3) verbundene Slave-Einheiten (20, 20', 20"), die jeweils einen Steuereingang (22) zum Empfang eines eingangsseitigen Signals vom Ausgang der in der Serie vorausgehenden Slave-Einheit (20, 20', 20") und einen Steuerausgang (23) zum Senden eines ausgangsseitigen Signals an die in der Serie der n Slave-Einheiten (20, 20', 20") jeweils nachfolgenden Slave-Einheit (20, 20', 20") besitzen;
wobei der Steuereingang (22) der ersten Slave-Einheit nicht signalisiert ist;
einen Adressspeicher in jeder Slave-Einheit (20, 20', 20"), welcher ausgebildet ist, eine kollektive Broadcast-Adresse und/oder eine individuelle Einheiten-Adresse zu speichern;
und wobei zusätzlich zwischen zwei seriell aufeinanderfolgende Slave-Einheiten (20, 20', 20") jeweils eine Steuerleitung (32) vorgesehen ist, die jeweils den Steuerausgang (22) der in der Serie vorausgehenden Slave-Einheit mit dem Steuereingang (22) der nachfolgenden Slave-Einheit verbindet, derart, dass das Ausgangssignal am Steuerausgang (23) gleichzeitig das Eingangssignal am Steuereingang (22) der jeweils nachfolgenden Slave-Einheit ist

## Beschreibung

### Gebiet der Erfindung

Die Erfindung betrifft ein adressierbares Master-Slave-System und ein Verfahren zum Adressieren von Slave-Einheiten.

### Hintergrund der Erfindung

Im Stand der Technik sind bereits seit langem verschiedenste Bussysteme mit ihren Komponenten sowie Verfahren zur Adressierung der Komponenten bekannt.

Grundsätzlich gilt hierbei, dass es bei Master-Slave-basierten Bussystemen eine Master-Einheit bzw. einen Master und zumindest einen vorzugsweise jedoch eine Vielzahl von Slaves bzw. Slave-Einheiten gibt, welche durch den Master angesprochen, also gesteuert werden können. Dabei werden die Befehle bzw. Nachrichten des Masters über ein zumindest halbduplexfähiges Bussystem und eine Busleitung dieses Bussystems übermittelt, wobei die Befehle des Masters mit einer Adresse des zu steuernden Slaves an alle Slave-Einheiten des Systems übermittelt werden. Obgleich alle Slaves die Befehle erhalten bzw. "hören", nimmt nur der Slave den Befehl an bzw. führt diesen aus, welcher selbst die Adresse aufweist, welche mit dem Befehl übermittelt wurde.

Die Busleitung kann abhängig vom Bussystem mit Zwischensteckern versehen und vom Master zu einem ersten Slave und in Reihe von Slave zu Slave geführt werden. Alternativ ist auch ein Durchschleifen durch die Slaves möglich, bei welchen also jeweils eine Busleitung vom Master zu dem ersten Slave und dann von Slave zu Slave führt, wodurch sich ebenfalls eine Reihenschaltung der Slaves bzw. eine Bustopologie ergibt.

Da ein Befehl über die Busleitung vom Master an alle Slaves übermittelt wird, "hören" bzw. empfangen alle Slaves den Befehl, es soll jedoch nur der tatsächlich angesteuerte Slave reagieren. Daraus ergibt sich, dass dem Master die Adressen aller zu steuernden Slaves bekannt sein müssen und jeder Slave eine individuelle und innerhalb des Bussystems einzigartige Adresse besitzen muss.

Zur Zuweisung einer solchen Adresse kommen im Stand der Technik manuelle, halbautomatische und auch automatische Verfahren zum Einsatz, welche beispielsweise darauf basieren, dass die Adressen der Slaves in einer durch ihre Verbindung miteinander festgelegten Reihenfolge inkrementell erhöht werden, bis der letzte Slave der Reihe adressiert ist.

Das hat jedoch den Nachteil, dass die Adressen, die vergeben werden, vorbestimmt sind und einem festen Muster unterliegen. Es ist hierbei nicht möglich den Slaves "willkürliche" Adressen zuzuweisen, welche von dem vorbestimmten festen Muster abweichen.

Auch gibt es Varianten der Adressvergabe, bei welchen den Slaves durch eine am jeweiligen Slave manuell vorgenommene Parametrierung eine Adresse in einen Speicher geschrieben wird, was dann für jeden Slave wiederholt werden muss und wobei die Adressen zusätzlich auch dem Master mitgeteilt werden müssen, woraus sich ein hoher Aufwand ergibt.

Zudem sind auch Lösungen bekannt, welche auf einer von Slave zu Slave führenden Steuerleitung basieren, welche die Slaves bei einer Adressierung steuert, wobei hierbei oftmals vorgesehen ist, dass die Steuerleitung bzw. ein über die Steuerleitung übertragenes Signal in den Slaves, beispielsweise gesteuert über einen Schalter, durchgeschleift wird. Eine solche Ausführung hat jedoch den Nachteil, dass zwingend alle Slaves mittels der Steuerleitung verbunden sein müssen, was bei voneinander entfernten Slaves problematisch sein kann, und dass über die Steuerleitung oder das zugehörige Bussystem meist komplexe Befehle bzw. komplexe Signalfolgen übertragen werden müssen, um eine Adressierung zu steuern, so dass derartige Verfahren insgesamt einer hohen Komplexität unterliegen.

Einen automatisierten Adressiervorgang schlägt die DE 103 36 301 A1 vor. Der Adressiervorgang ist ebenfalls für ein Master-Slave-Bussystem mit einer Busleitung vorgesehen, deren Anfang und Ende mit der Master-Einheit verbunden sind. Bei diesem Verfahren ist im Laufe eines Adressvergabevorgangs die Busleitung des Systems unterbrochen, so dass die Master-Einheit die Slave-Einheiten über einen Takteingang ansprechen muss. Des Weiteren ist das Verfahren nur für solche Systeme anwendbar, die eine ringförmige Busleitung aufweisen. Das vorliegende Verfahren beschreibt ein solches Adressierungsverfahren.

Aus der EP 2 287 689 EP ist ein weiteres Bus-basierendes Adressierverfahren für Slave-Einheiten bekannt. Die Slave-Einheiten müssen hierzu über jeweils an das verwendete Bussystem angepasste Busschnittstellen verfügen, über welche sie mit einer oder mehreren Busleitungen eines Master-Slave-Bussystems verbunden werden.

Vor diesem Hintergrund ist es Aufgabe der vorliegenden Erfindung, vorbesagte Nachteile zu überwinden und ein verbessertes Bus-basiertes Verfahren zum Adressieren von Slave-Einheiten sowie ein entsprechendes adressierbares Master-Slave-System bereitzustellen, welches auf eine Bus-Architektur für die Adressvergabe zurückgreift und einfach sowie zuverlässig in der Implementierung, der Handhabung und im Betrieb ist.

Diese Aufgabe wird mit einem Bus-basierten Verfahren zum Adressieren von Slave-Einheiten mit den Merkmalen von Anspruch 1 sowie mit einem Master-Slave-System mit den Merkmalen von Anspruch 6 gelöst.

Die erfindungsgemäße Lösung ermöglicht eine Vergabe eindeutiger Adressen in Reihenfolge der Verkabelung. Dennoch können die Adressen flexibel innerhalb eines Adressraumes vergeben werden, da anders als beim Schieberegisterverfahren die Adressen nicht Auf- oder Absteigend vergeben werden müssen.

Ferner liegt ein Vorteil gegenüber der Seriennummernautoadressierung (wie z. B. aus der EP 2503763 B1 bekannt) darin, dass die Reihenfolge des Findens der Slaves streng nach Verkabelungsreihenfolge erfolgt und damit die Position der Slave-Einheit gemäß Kabelplan exakt bekannt ist.

Ein weiterer Vorteil gegenüber bekannten Adressierungsverfahren liegt darin, dass keine Freigabeschaltung mit Relais und Schalter benötigt wird, die eine Auswahl zwischen zwei Freigabesignalen trifft. Das erfindungsgemäße Verfahren kommt mit nur einer einzigen Steuerleitung zur Freigabe aus. Auch wird bei der erfindungsgemäßen Schaltungstopologie zur Weiterleitung der Steuersignale von einer Slave-Einheit zur nächsten kein Schalter benötigt. Ein und Ausgangssignale sind somit komplett voneinander getrennt.

Grundgedanke der vorliegenden Erfindung ist dabei folgendes Konzept. Bei erfindungsgemäßen Master-Slave-basierten Bussystemen gibt es einen Master und n zu adressierende Slave-Einheiten. Diese sind alle mittels mindestens eines Halbduplex-fähigen Bussystems miteinander über eine Busleitung vernetzt. Der Bus wird dabei bei jedem Slave zum nächsten Slave durch geschleift, was bewirkt, dass alle Bus-Signale aller Teilnehmer auch jeweils direkt bei allen anderen mit dem Bus-System verbundenen Teilnehmern gleichzeitig anliegen.

Erfindungsgemäß besitzt jeder Slave außerdem mindestens einen Steuereingang Eingang DCI-In (Digital- oder Analogeingang) sowie mindestens einen Steuer-Ausgang DCI-Out (Digital- oder Analogausgang) zur Adressierung. Der Ausgang des ersten (initialen) Slave ist mit dem Eingang des zweiten Slave verbunden, der Ausgang des zweiten mit dem dritten usw. und der Ausgang der letzten Slave-Einheit kann optional mit einem Eingang des Masters verbunden sein, um dem Master das Ende des Adressierungsvorganges zu melden.

Zu Beginn des erfindungsgemäßen Adressiervorgangs besitzen alle Slave-Einheiten dieselbe Adresse, zum Beispiel die Adresse "1". Allerdings hängt dies vom gewählten Bussystem und dem Adressraum ab. Der Adressraum bei Verwendung eines MODBUS-RTU reicht von 1 bis 247, wobei die Adresse "0" als Broadcast Adresse für alle Slaves genutzt wird.

Broadcasts in bekannten Bus-Systemen führen jedoch zu keinen Antworten von Seiten der Slaves zurück zum Master. Das Herstellen einer solchen Ausgangslage kann durch Buskommandos zum Ändern der Slave Adresse auf 1 an die MODBUS-RTU Broadcast Adresse 0 erfolgen. Dieses ist aber nicht notwendig, wenn alle Slaves ab Werk bereits mit der Adresse 1 versehen ausgeliefert werden.

Jede Slave-Einheit verfügt nach dem Ausführen deserfindungsgemäßen Verfahrens über eine im Bus-System einmalig vergebene Slave-Adresse, damit eine Kommunikationsaufforderung von Master von nur einem Slave bearbeitet und
beantwortet wird. Die Adresszuweisung ist erforderlich, damit am Bus kommuniziert werden kann. Erfindungsgemäß wird diese Adressierung automatisch bewerkstelligt. Der DCI-In des ersten Slaves ist nicht beschaltet. Über einen Broadcast Befehl an die Adresse 1 werden zunächst alle Slaves dazu gebracht ein Signal an ihrem jeweiligen DCI-Out auszugeben. Dieses Signal kann z.B. positiv oder negativ sein, also auch ein Brücken auf Massepotential. Grundsätzlich sieht das erfindungsgemäße Konzept vor, dass nur diejenigen Slave-Einheiten auf einen Befehl reagieren, die die angesprochene Adresse besitzen und an dessen Eingang DCI-In kein Signal anliegt.

Alle Teilnehmer des Bussystems die noch die initiale Adresse 1 aufweisen und ein Signal an ihrem DCI-In anliegen haben reagieren nicht auf Befehle an diese initiale Adresse. Der erste Teilnehmer der Kette hat Prinzip-bedingt kein Signal an seinem DCI-In, da der Eingang überhaupt nicht beschaltet ist. Konzeptionell ist somit vorgesehen, dass eine Slave-Einheit dann einen Befehl ausführt, wenn die beiden folgenden Bedingungen für diese Slave-Einheit erfüllt sind:
(1) Am Steuereingang (DCI-in) liegt kein Signal an und
(2) die Adresse stimmt mit der mit dem Befehl vom Master verwendeten Adresse überein.

Nun werden Bus Befehle an den Teilnehmer mit Adresse 1 gesendet, die diesem Teilnehmer eine neue Adresse zuweisen, zum Beispiel Adresse 2, wobei auch jede andere Adresse des Addressbereichs denkbar ist. Da nur der erste Slave der Kette der Slaves zu diesem Zeitpunkt kein Signal am Eingang hat, reagiert nur dieser auf diese Befehle. Danach wird an diese neue Adresse 2 ein Befehl zum Abschalten des Signals an dessen Ausgang gesendet. Dadurch haben nun die ersten beiden Slaves kein Signal mehr an ihrem DCI-In, der dritte, vierte usw. aber weiterhin.

Dieser Vorgang (Senden von Umadressierungsbefehlen an Adresse 1 usw.) wird solange fortgeführt, bis auf die Anforderung zum Ändern der Adresse keine Bestätigung mehr zurückkommt. Da die Slave Adresse 1 keine Broadcast Adresse ist, werden Befehle, die an diese Adresse geschickt werden, vom Slave durch ein Antworttelegramm bestätigt. Optional können die Slaves eine Signal-LED besitzen. Diese leuchtet solange auf, solange am DCI-In ein Signal anliegt oder dieser auf Masse gezogen ist (was in der Terminologie der Erfindung als signalisierter Eingang betrachtet wird). Dadurch kann man auch an den Slaves erkennen, wie weit die Adressierung schon fortgeschritten ist und es können fehlerhafte Verbindungen von DCI-Out zum nächsten DCI-In erkannt werden. Einzig beim ersten Slave in der Kette leuchtet diese LED nicht, da dieser Slave kein DCI-In Signal erhält bzw. keinen signalisierten Eingang besitzt.

Anders ausgedrückt, lässt sich das Verfahren wie folgt skizzieren:
a) Optionale Zuweisung der Slave-Adresse 1 bzw. eine andere beliebige Startadresse an alle Teilnehmer durch entsprechende Broadcast-Befehle, so dass alle Slave-Einheiten die gleiche Adresse erhalten.
b) Dann erfolgt bzw. erfolgen sukzessive Broadcast Befehl(e) an alle Teilnehmer zum Einschalten des Ausgangssignals des DCI-Out am jeweiligen Ausgang der Slave-Einheit.
c) Danach erfolgt das Senden von Umadressierungsbefehlen an die gemeinsame Startadresse mit dem Ziel die Adresse desjenigen Slaves zu ändern, der an seinem DCI-In Eingang kein Signal anliegen hat (bzw. keinen signalisierten Zustand besitzt) aber noch die Startadresse besitzt. Die jeweils geänderte Adresse kann vom Master frei im Adressraum bestimmt werden.
d) Dann erfolgt sukzessive das Senden eines Befehls an die jeweils neu vergebene Slave-Adresse zum "Abschalten" des DCI-Out Signals. Sobald dies geschehen ist, liegt bei dem sukzessive nachfolgend nächsten Slave der Kette kein Signal mehr an dessen Eingang DCI-In an.
e) Sukzessives Wiederholung der Schritte c) und d) solange bis auf den Befehl zur Adressänderung des Slaves mit der ursprünglich vergebenen Ausgangsadresse keine Quittierung mehr erfolgt. Dabei ist zu beachten, dass nicht als Broadcast gesendete Telegramme bei nicht Empfang einer Quittierung vom Master mehrfach wiederholt also mehrfach gesendet werden.
f) Optional kann der DCI-Out des letzten Slaves in der Bus-Kette mit einem Eingang des Masters verbunden sein und der Adressierungsvorgang dann abgebrochen werden, wenn dort kein Signal mehr anliegt und somit der letzte Slave der Kette das Ausgangssignal am Ausgang DCI-Out abgeschaltet hat.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigt:

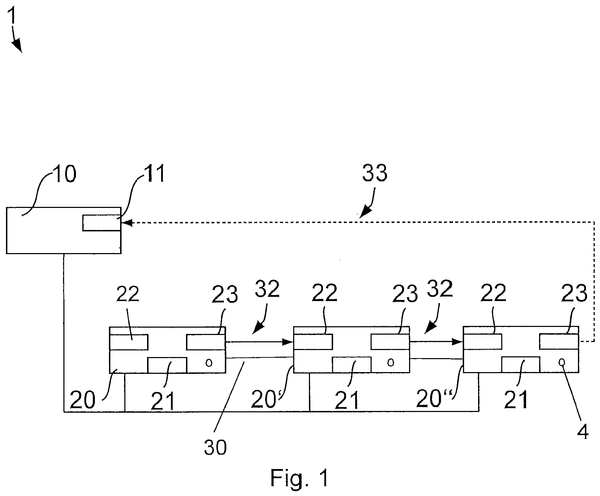

- Fig. 1: eine beispielhaft schematische Darstellung eines Master-Slave-Bussystems.

Nachfolgend wird die Erfindung beispielhaft mit Bezug auf die Ausführung gemäß der Figur 1 beschrieben.

Die Slave-Einheiten 20, 20', 20" des in Figur 1 dargestellten Master-Slave-Bussystems 1 besitzen jeweils einen Steuereingang 22 (auch als DCI-in bezeichnet) sowie einen (auch als DCI-out bezeichnet). Der Steuerausgang 23 der ersten Einheit 20 ist über eine Steuerleitung 32 mit dem Steuereingang 22 der zweiten Einheit 20' verbunden und der Steuerausgang 23 der zweiten Einheit 20' ist mit dem Steuereingang 22 der dritten und hier letzten Einheit 20" verbunden, jeweils über eine dazwischen liegende Steuerleitung 32.

Werden weitere Slave-Einheiten in der Kette verwendet, so wird das zuvor beschriebene Konzept sukzessive so weiter gestaltet.

Der Steuerausgang 23 der letzten Einheit 20" kann optional über eine hier gestrichelt dargestellte Steuerleitung 33, welche auch als Rückmeldeleitung bezeichnet werden kann, mit einem Steuereingang 11 des Masters 10 verbunden sein, um dem Master 10 das Ende der Adressierungsvorganges zu melden, was durch die Übermittlung eines Signals von der letzten Einheit 20" an den Master 10 realisiert ist, nämlich wenn der Steuerausgang 23 in den nicht signalisierten Zustand per Befehl vom Master an den letzten Slave gesetzt wurde.

Ferner weist jede der Einheiten 20, 20', 20" eine durch einen Mikrocontroller realisierte übergeordnete Steuerlogik 21 auf, welche ausgebildet ist, die durch die Eingangs-Schaltung verarbeiteten eingangsseitigen Signale zu verwerten bzw. zu verarbeiten und die Ausgangs-Schaltung zur Erzeugung des ausgangsseitigen Signals zu steuern. Da die Einheiten 20, 20', 20" als Slaves eines Master-Slave-Bussystems 1 vorgesehen sind, werden diese im Weiteren auch als Slave-Einheiten oder Slaves bezeichnet.

Zu Beginn des erfindungsgemäßen Verfahrens wird allen Slaves 20, 20', 20" eine vorbestimmte Startadresse zugewiesen (z. B. die Adresse 1).

Eine vom Master 10 an die Startadresse übermittelte Nachricht wird dann von allen Slaves 20, 20', 20" empfangen bzw. verarbeitet, führt jedoch nicht zu einer Rückantwort der Slaves 20, 20', 20" (was der Fall ist, wenn die Nachricht an die Broadcast Adresse 0 gesendet wurde).

Für die korrekte Funktionsweise des Master-Slave-Bussystems 1 muss jede Slave-Einheit 20, 20', 20" über eine innerhalb des Bussystems einmalige Einheiten-Adresse verfügen, so dass eine Kommunikationsaufforderung durch den Master 10 bzw. eine vom Master 10 über die Busleitung 30 übermittelte Nachricht nur von einem Slave 20, 20', 20" bearbeitet und beantwortet wird und zwar von demjenigen, der aufgrund einer Adressänderungsaufforderung seinen Ausgang auf den nicht signalisierten Zustand ändert, so dass am Eingang des nächsten (nachfolgenden Slave) kein Eingangssignal mehr vorhanden ist. Dies ist aber die Bedingung, dass die Adressänderungsaufforderung von dem angesprochenen Slave verarbeitet wird. Da zu Beginn des Verfahrens nur der erste Slave keinen signalisierten Eingang besitzt, ändert auch nur dieser seine Adressierung entsprechend dem Befehl vom Master.

Dann erfolgt das Senden eines Befehls an die vom Master 10 mit der Adressänderungsaufforderung geänderte neue Adresse an die Slave-Einheit, die gerade diese neue Adresse erhalten hat. Der Befehl umfasst das "Abschalten" des DCI-Out Signals dieser Slave-Einheit. Sobald dies geschehen ist, liegt bei dem sukzessive nachfolgend nächsten Slave der Kette kein Signal mehr an dessen Eingang DCI-In an.

Dieser Vorgang wird sukzessive wiederholt solange bis auf den Befehl des Masters 10 zur Adressänderung des Slaves mit der ursprünglich vergebenen Ausgangsadresse keine Quittierung mehr erfolgt. Optional kann die Quittierung mittels einer LED 4 an jedem Slave 20, 20', 20" optisch erkennbar angezeigt werden.

Weiter kann optional ein Beenden des Verfahrens erfolgen, wenn der Master 10 den Adressänderungsbefehl an den letzten Slave gesendet hat und dieser über die optionale Steuerleitung 33 die Abbruchbedingung an den Master 10 sendet.

Wenn allen Slaves 20, 20', 20" damit eine Adresse zugewiesen wurde, also eine der Bedingungen zum Beenden des Verfahrens erfüllt sind, können die Slaves 20, 20', 20" von dem Adressiermodus in ihren Betriebsmodus geschaltet werden, was mittels einer Nachricht des Masters 10 an die neu vergebenen Adressen initiiert werden kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Alle offenbarten Merkmale sind in beliebigen Kombinationen verwendbar soweit dies technisch möglich ist.

## Patentansprüche

1. Master-Slave-System (1) mit n seriell über eine Busleitung (3) verbundene Slave-Einheiten (20, 20', 20"), die jeweils einen Steuereingang (22) zum Empfang eines eingangsseitigen Signals vom Ausgang der in der Serie vorausgehenden Slave-Einheit (20, 20', 20") und einen Steuerausgang (23) zum Senden eines ausgangsseitigen Signals an die in der Serie der n Slave-Einheiten (20, 20', 20") jeweils nachfolgenden Slave-Einheit (20, 20', 20") besitzen;
wobei der Steuereingang (22) der ersten Slave-Einheit nicht signalisiert ist;
einen Adressspeicher in jeder Slave-Einheit (20, 20', 20"), welcher ausgebildet ist, eine kollektive Broadcast-Adresse und/oder eine individuelle Einheiten-Adresse zu speichern;
und wobei zusätzlich zwischen zwei seriell aufeinanderfolgende Slave-Einheiten (20, 20', 20") jeweils eine Steuerleitung (32) vorgesehen ist, die jeweils den Steuerausgang (23) der in der Serie vorausgehenden Slave-Einheit mit dem Steuereingang (22) der nachfolgenden Slave-Einheit verbindet, derart, dass das Ausgangssignal am Steuerausgang (23) gleichzeitig das Eingangssignal am Steuereingang (22) der jeweils nachfolgenden Slave-Einheit ist.

2. Master-Slave-System (1) nach Anspruch 1, **dadurch gekennzeichnet, dass** die Eingangs-Schaltung und die Ausgangs-Schaltung sowie der Steuereingang (22) und der Steuerausgang (23) schaltungstechnisch voneinander getrennt und/oder nur durch eine übergeordnete Steuerungslogik (21) der jeweiligen Einheit (20, 20', 20") miteinander verbunden sind.

3. Master-Slave-System (1) nach Anspruch 1 oder 2, **dadurch gekennzeichnet, dass** jede Slave-Einheit (20, 20', 20") über einen internen Mirocontroller (21) verfügt.

4. Master-Slave-System (1) nach einem der vorhergehenden Ansprüche **dadurch gekennzeichnet, dass** der Master (10) ausgebildet ist einen Adressänderungsbefehl an eine oder mehrere Slave-Einheiten (20, 20', 20") zu senden, jedoch nur diejenige Slave-Einheit (20, 20', 20") den Adressänderungsbefehl ausführt, deren Steuereingang (22) nicht signalisiert ist und welche, die vom Master (10) angesprochene Adresse besitzt.

5. Master-Slave-System (1) nach Anspruch 4 **dadurch gekennzeichnet, dass** der Master (10) ausgebildet ist einen solchen Befehl an eine Slave-Einheit (20, 20', 20") mit einer bestimmten Adresse zu senden, um deren Steuerausgang (23) in einen nicht signalisierten Zustand zu versetzen, der vorzugsweise unmittelbar auch den Zustand am nachfolgenden Steuereingang (22) bestimmt.

6. Verfahren zur Adressierung von n Slave-Einheiten (20, 20', 20") eines Master-Slave-Systems (1) insbesondere eines Master-Slave-Systems (1) gemäß einem der vorhergehenden Ansprüche mit den folgenden Schritten:
a) Einstellen einer gemeinsamen Startadresse an alle n Slave-Einheiten (20, 20', 20"), vorzugsweise durch Broadcast-Befehl(e) oder durch eine werkseitige Einstellung, so dass alle Slave-Einheiten die gleiche Startadresse erbesitzen;
b) sukzessives Senden von Broadcast Befehlen vom Master (10) an alle Slave-Einheiten (20, 20', 20") zum Einschalten des Ausgangssignals des Steuerausgangs (23) am jeweiligen Steuerausgang (23) der betroffenen Slave-Einheit.
c) Senden von Umadressierungsbefehlen an die Slave-Einheiten (20, 20', 20") mit gemeinsamer Startadresse mit dem Ziel die Adresse derjenigen Slave-Einheit zu ändern, die an ihrem Steuereingang (22) kein Signal anliegen hat oder keinen signalisierten Zustand besitzt.
d) Senden eines Befehls an die jeweils neu vergebene Slave-Adresse zum "Abschalten" des Signals am Steuerausgang (23) an der betroffenen Slave-Einheit (20, 20', 20"), so dass bei der sukzessiv in der Kette nachfolgenden nächsten Slave-Einheit (20, 20', 20") kein Signal mehr an dessen Steuereingang (22) anliegt.
e) Sukzessives Wiederholung der Schritte c) und d) solange bis alle Slave-Einheiten (20, 20', 20") umadressiert sind und insbesondere auf den Befehl zur Adressänderung der Slave-Einheiten mit der ursprünglich vergebenen Ausgangsadresse keine Quittierung mehr erfolgt.

7. Verfahren nach Anspruch 6, wobei der Steuerausgang (23) der letzten Slave-Einheit in der Kette der Slave-Einheiten über eine Steuerleitung (33) mit einem Eingang des Masters (10) verbunden ist und der Adressierungsvorgang dann abgebrochen wird, wenn am Steuerausgang (23) der letzten Slave-Einheit kein Signal mehr anliegt und somit der letzte Slave der Kette das Ausgangssignal am Steuerausgang (23) aufgrund einer Anweisung gemäß dem Schritt d) in Anspruch 6 abgeschaltet hat.
